# EUROPEAN PATENT APPLICATION

(11) **EP 1 867 233 A1**
(43) Date of publication of application: **19.12.2007**
(21) Application number: 06012023.5
(22) Date of filing: 12.06.2006
(51) Int. Cl.: A22C 7/00

(54) **Automatic stuffing line**

(71) Applicant: Mecaniques Pujolas, S.L., 17800 Olot (ES)
(72) Inventor: Pujolas Coma, Joan, 17854 Sant Jaime de Llierca (ES)
(74) Representative: Torras Toll, Jorge

(57) **Abstract**

Stuffing line for pieces of meat and similar kinds of product, having special characteristics because of the fact that it basically consists of a meat supplying device (1)with the use of a conveyor belt (4), which puts a piece of meat into the stuffing machine per every working cycle, a stuffing device (2) that compresses and puts the product into a tube of casing and, optionally, an extractor device (3) which closes the piece of meat that has been stuffed inside the casing and takes it to the next step in the production line.

## Description

The aim of the invention, as it is said in the beginning of this descriptive memory, consists of an automatic stuffing line to be used in the meat processing industry. It is used mainly with whole meat parts, such as stuffed loin or similar.

There are different ways to stuff whole meat parts; the most traditional consists of working within a completely craft tradition, stuffing the parts manually. This is done with the help of a funnel or similar, in a piece of casing with a length that is suitable for the kind of product one may wish to get.

In the market there are also different kinds of stuffing machines to do such work more profitable; generally speaking, they are all based on similar ways of functioning: a hopper, funnel or other devices to get the meat in. At the back, there is a pressing element that pushes the meat forward to a stuffing funnel, where the worker should have put a stretch of casing all around. This stretch of casing, which should have been previously folded or wrinkled, will be the holder of such piece of meat; this way of working requires the constant supervision of a worker, who has to take charge of filling the hopper or funnel with product. Moreover, the worker has to somehow check in a manual way the size of the piece of meat that will be used to get the final product. And he will also take charge, at the end, of manually taking the product when this is finished.

On the other hand, there are other more advanced machines. These have a mould that is manually filled with the piece of meat to be stuffed, in a way that when the mould is closed and the piece of meat is pressed together, it is pushed out by a cylinder. This cylinder (usually pneumatic) pushes the product out of the mould through a funnel where the worker keeps a tube of casing all around. Such a tube of casing should have been previously folded around the funnel, and the piece of meat is pushed in it; by the end of the process, the worker just cuts the piece of stuffed meat that is coming out, clipping the two ends of it so that the product is finished.

This way of working with the product has the inconvenient that cannot be integrated to an automatic line to be used to stuff the piece of meat. That implies high costs, and a long time to be finished with the product.

In order to solve these problems, the new mechanism that is described in this memory has been designed.. In consists of a line for stuffing the meat automatically. Therefore, such a device allows supplying constant quantities of meat product, which has been previously weighted (also in an automatic way or manually). Furthermore, it all reduces the job done by the worker to the minimum.

This new line for stuffing has also the advantage to have been designed in a way that one can detach it by parts and carry them easily in case the machine was to be moved from one place to another.

The novel line for stuffing automatically basically consists of three devices which are clearly different, and physically detachable one from the others; first of all, there is a supplying device of meat product, which fills the stuffing line with a piece of meat per every working cycle; secondly, there is a stuffing device that presses the meat together and fits it into a tube of casing that has been previously folded; and finally, an extractor device closes the piece of product that has been just stuffed in the casing and takes it out from the stuffing line.

The meat supplying device is made of a chassis with a totally automatic conveyor belt. This conveyor belt is driven by an electric engine of the "step by step" kind (or similar), and it has some separators at right angles to the direction of the belt movement; the separators are used to create several intervals all along the conveyor belt, where the pieces of product to be stuffed should be placed, one by one in such intervals. In every one of these intervals there is a sensitive detector, which is detected by a sensor that goes together with the chassis of the conveyor belt; that will allow the "step by step" engine going over a predetermined distance, which will be the distance there is from one of the detectors to another, every time this is brought into operation.

The stuffing device consists of a chassis with a press (preferably pneumatic). The press works with a mould that can be changed; this mould, made of light materials that allow no friction, such as Teflon or similar, consists of a fix part inside the chassis and another part that moves, associated to the press. This last part has two vertical working cylinders. When the two parts are joined together because of the press, they form a straight cavity with constant section, opened at the two sides of it. Then an horizontal piston can get through such a space, pushed by a second cylinder that is also pneumatic. The horizontal piston mentioned above is the one that pushes the compacted piece of meat.. This way the product is pushed out from the mould and finally from the chassis of the stuffing device, all through a funnel that can be removed and changed, and where the worker should have previously put a tube of casing, Such a tube of casing, which should have been previously wrinkled, is where the product will be fit by the end of the process. The funnel is made of a tube with internal section, which is put to the same level of the cavity inside the mould the piece of meat will come from; at one of its sides, this funnel has an anchoring system, like in a bayonet, that can be fixed with an "L" shape at any of the two holes at the sides. And that also happens in a small auxiliary door there is for the lower part of the mould to be put in and out, this when such a mould needs to be changed; the small door is in the main part of the stuffing device, and to the same level of the lateral opening of the mould, where the product that is being stuffed will come out from.

The place where you get to the stuffing device, through which the piece of meat gets inside the mould, and previously coming from the conveyor belt, is protected by a motorised transparent door. Such a door is preferably driven by a pneumatic piston

The extractor device consists of a chassis where there are the elements that are now to be described next.

A pair of pincers, the "scissors" kind, which takes the free end of the funnel. The funnel, when in working order, goes partially inside the stuffing device. The pincers, when taking the free end of the funnel, hold the casing there is around it, and that prevents such a casing from being dragged by the product all in a piece. It then helps the whole tube of casing there is around the funnel to spread in a controlled way, and also under the suitable strain, showing some opposition to being moved forward while it is filled with the meat.

Secondly, there is a clipping machine, the standard kind, which does three actions on the piece of meat that has just been stuffed; and the three actions are done at the same time: it places two clips, it places a piece of cord with one of the clips (so that the product can be hung when the process this has to undergo is finished) and lastly, it cuts the casing between the two clips. The clipping machine is set on two mountings, which move cross and along in relation to the stuffing funnel. These movements are driven by other two working cylinders, preferably pneumatic.

To both sides of the clipping machine there are two casing throttles, where the funnel gets through; the aim is to throttle the casing to both sides of the clipping machine, until it reaches a diameter that allows doing the clipping, tying and cutting such a clipping machine does on the product. Every throttle consists of two yokes put face to face, each one of them with an internal space that is rounded and has a small groove in its central part. At the same time, every yoke is driven to one way but in opposite directions to each other by its corresponding pneumatic cylinder.

When driven at the same time, the two pneumatic cylinders in the two yokes that make up the throttle go one against the other, reducing the internal diameter of the ring that constitutes its junction, compressing the section of the tube of casing that is finally placed in the space there is in the junction of the two grooves in the semicircular yokes.

Finally, together with the elements described above, there is a conveyor belt that takes out the product from the line when this is finished. The conveyor belt has a jaw that stops the piece of meat that has already been stuffed and clipped. This is driven by two pneumatic cylinders and a manual regulator device at the same height, preferably the "scissors" kind, which adjusts the height of the conveyor belt, depending on the diameter of the piece of meat to be stuffed.

In order to make the transport and installation of this new stuffing line easier, this is done preferably with the three independent devices (which of course apart from being independent can be encased together) described before in this memory: the meat supplying device, the stuffing device and the extractor device.

All the devices described here are controlled automatically by a central unit, which allows being programmed in a flexible way.

The operation of the new machine can be considered as divided, in outline, into two phases: the configuration phase and the production phase.

In the configuration phase, the machine will be provided with the suitable components for the diameter and the kind of product to be stuffed. There will be the two parts of the mould, upper and lower (the lower part is taken in and out through the small auxiliary door). The two parts of the mould make up the diameter of the cylinder, which will be filled with the piece of meat to be stuffed. There will also be the head of the piston that moves inside the mould pushing the product (such a piston will also need to have the suitable size), the suitable funnel for the diameter of the piece of meat and the pincers of the "scissors" kind to hold back the casing. Moreover, the height of the conveyor belt should be adapted to the height of the conveyor belt that is used to extract the product when finished. This levelling will be done with the use of a regulating screw.

Lastly, the distance covered by the needed auxiliary components will be programmed, depending on the sizes of the pieces of meat to be stuffed.

The production phase will develop in the way it is described next:

First of all, the pieces of meat to be stuffed are placed, manually or automatically, in the intervals there are in the conveyor belt, which is part of the meat supplying device. The meat should then be placed piece by piece in each one of the intervals the belt has; at this time, the "step by step" engine gets into working order to cover the distance corresponding to one of the intervals, so that the piece of meat falls inside the machine.

This way, it gets to the stuffing device, through which the piece of meat gets inside the mould because of the gravity. The mould is kept open with the pressing part to its highest position.

Next, the transparent door that blocks the entry to the mould goes down; such a door is a security element to prevent the worker from getting accidentally into the pressing room when the press is brought into working order.

After that, the press goes down, pressing together the movable part of the mould with the one that is fixed, closing and compressing the piece of meat.

Afterwards, the pincers with the "scissors" are closed around the stuffing funnel, softly taking the wrinkled casing where the product will be kept as such a casing is being unfolded. The casing is clipped at one of the ends, in order to prevent the piece of meat from accidentally falling from inside it.

Next, the pushing piston in the second pneumatic cylinder is brought into working order, pushing the compressed piece of meat through the closed mould and taking it out from there through the funnel. The product is then taken inside the tube of wrinkled casing there is around the funnel, which is gradually unfolded as the pincers of the scissors kind give it a constant pressure.

As the piece of meat is being stuffed into the casing, this is placed on the conveyor belt that carries it out from the stuffing machine,

When the whole piece of meat has been put inside the casing and it is placed in the extractor belt, the pneumatic jaw is activated in order to stop the product, which is placed at the front part of the belt that carries the meat out from the machine. This way, the product is supported on the belt. At this moment the head of the stuffing piston moves backwards, and after that, the casing throttling system is brought in to operation order; to do that, the pneumatic cylinders that move the yokes are activated, closing the throttles and compressing the diameter of the tube of casing that is kept between the two throttles.

Next, the clipping device is brought in to working order ; first, the cross mounting of the clipping machine draws forward until it gets to the piece of casing that is throttled behind the stuffed piece of meat, and after that the pincers in the clipping machine close on there.; afterwards, the longitudinal mounting moves in a parallel way with the stuffed piece of meat, which has been stopped by the pneumatic jaw. With that, the product is pressed together inside the casing; it is now when the clipping machine works, doing its triple operation: it places a piece of cord at the end of the stuffed piece of meat, it places two clips (one closing the product that has been finished and another one closing the tube of casing where the next piece of meat will be fit) and lastly, it cuts the casing in between the two clips, having this way a piece of meat which is totally finished,

At this moment, the finished product is released from the jaw that was holding it, and it is taken out by the extractor belt until the end of it. By the end of the clipping device, both the longitudinal and the cross mountings move backwards to their initial resting position.

During the tying phase, the pushing piston draws backwards, the press goes up pulling out the upper part of the mould from the lower part, which is fixed, and the transparent door is opened. This way the machine is ready to stuff the next piece of meat.

These three devices are securely assembled constituting a unity through any kind of anchoring. However, the line can work in a semiautomatic way, getting rid of the extractor device and replacing the stuffing funnel described for a conventional one. In such cases, the tying and clipping of the product will be done by hand.

### DESCRIPTION OF THE DRAWINGS

With the aim of explaining all what has been described, there is a set of drawings attached to the descriptive memory, which will be also part of it as a whole. In them it is shown an example of a practical carrying out of the process, in a simplified and schematic way. That will be only an explanatory example, even though not restrictive, of the traits of this new stuffing line.

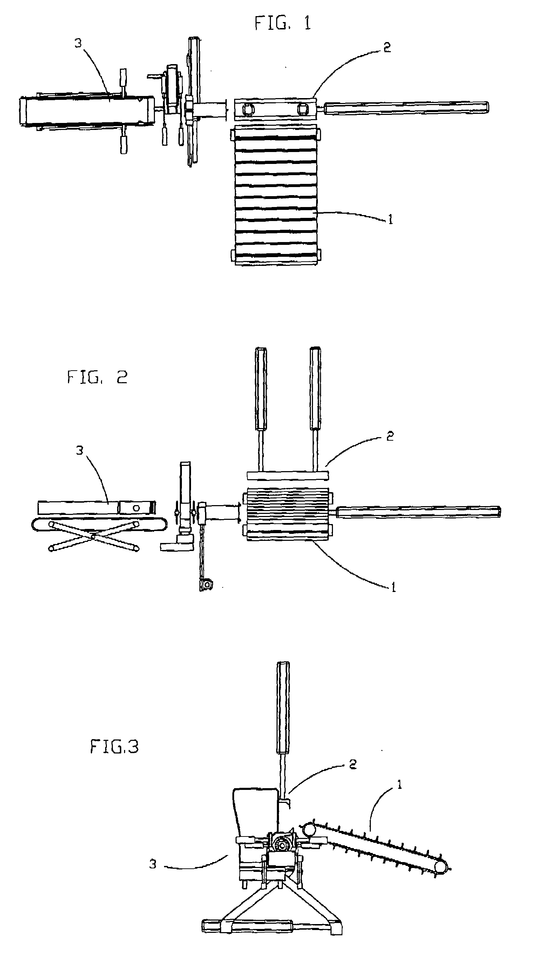

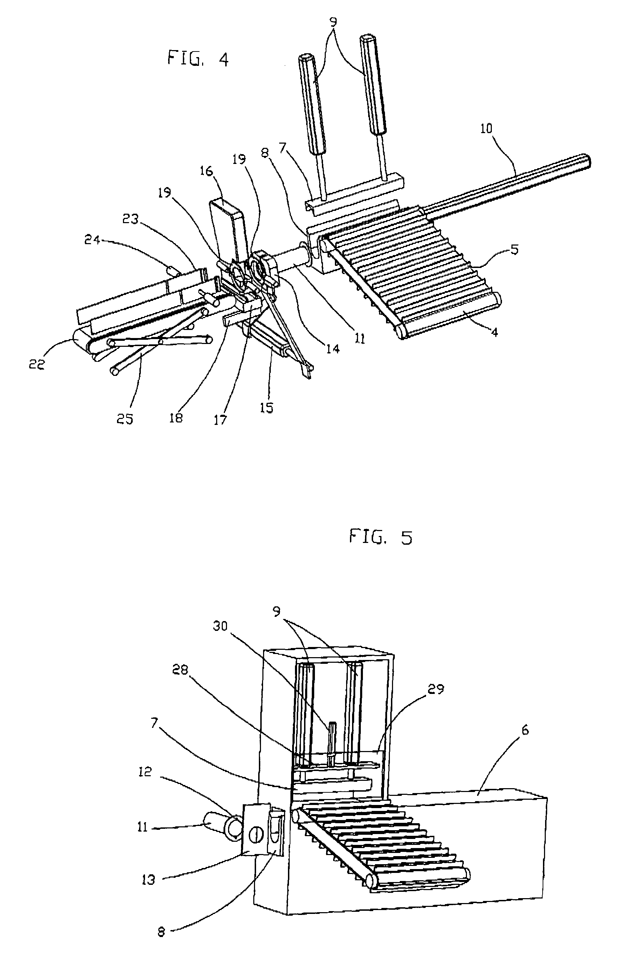

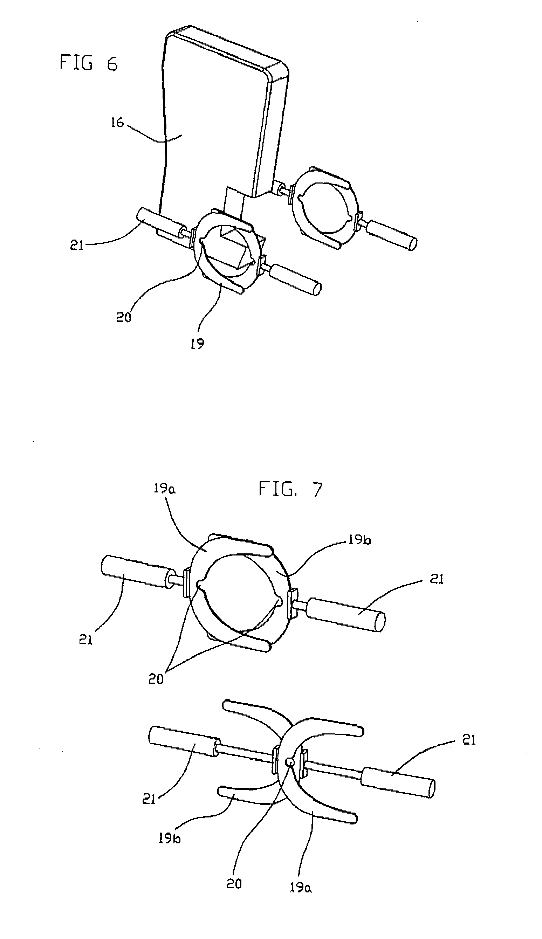

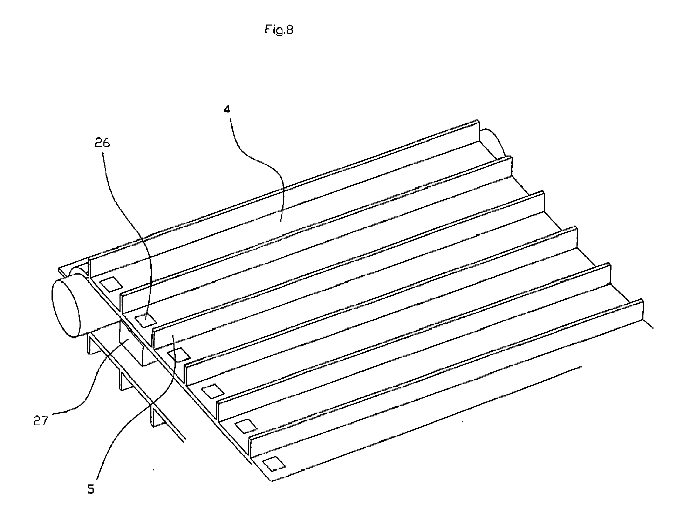

Figures 1, 2 and 3 show three different views of the new stuffing line: plan, raised and sectional view.
Figure number 4 shows a general view in perspective.
Figure number 5 shows a view in perspective of the meat supplying device and the stuffing device, with a detail on the lateral small door, which is open, and a mould which is partially taken out from the machine.
Figure number 6 shows a vie in perspective of the clipping machine and the two casing throttles, one to each side of the clipping machine.
Figure number 7 shows two views in perspective of one of the throttles; in the upper view there is such a throttle not in working order, while in the lower view it is in operation order, throttling the casing.
Figure number 8 shows a detail on the filling conveyor belt where sensitive detector can be seen.

### PRACTICAL CARRYING OUT OF THE WHOLE PROCESS

In the figures attached to the memory, there is a practical case where it is shown how to carry out the whole process of stuffing and clipping with the new machine.

The novel line for stuffing automatically basically consists of three devices which are detachable one from the others; first of all, there is a supplying device (1) of meat product, which fills the stuffing line with a piece of meat per every working cycle; secondly, there is a stuffing device (2) that presses the meat together and fits it into a tube of casing that has been previously folded; and finally, an extractor device (3) closes the piece of product that has been just stuffed in the casing and takes it out from the stuffing line.

The meat supplying device (1) is made of a chassis with a conveyor belt (4) on it. This conveyor belt (4) is driven by an electric engine of the "step by step" kind (or similar), and it has some separators (5) at right angles to the direction of the belt movement; the separators are used to create several intervals all along the conveyor belt, where the pieces of product to be stuffed should be placed, one by one in such intervals. In every one of these intervals there is a sensitive detector (26), which is detected by a sensor (27) that goes together with the chassis of the conveyor belt; that will allow the "step by step" engine going over a distance, which will be the distance there is from one of the detectors to another, every time this is brought into operation.

The stuffing device (2) consists of a chassis (6) with a pneumatic press (28) on it. The press works with a mould that can be changed; this mould consists of a fix part (8) inside the chassis and another part that moves (7), which is associated to the press (28). This last part has two cylinders (9). When the two parts (7 and 8) are joined together because of the press, they form a straight cavity with constant section, opened at the two sides of it. Then an horizontal piston can get through such a space, pushed by a second cylinder (10) which is also pneumatic. The horizontal piston mentioned above is the one that pushes the compacted piece of meat.. This way the product is pushed out from the mould and finally from the chassis of the stuffing device, all through a funnel that can be removed and changed (11), and where the worker should have previously put a tube of casing. Such a tube of casing, which should have been previously wrinkled, is where the product will be fit by the end of the process. The funnel (11) is made of a tube with internal section, which is put to the same level of the cavity inside the mould (7 and 8) the piece of meat will come from. This funnel has an anchoring system (12), like in a bayonet, and it is fixed to the small auxiliary door (13) there is for the lower part of the mould (8) to be put in and out.

The place where you get to the stuffing device, through which the piece of meat gets inside the mould, and previously coming from the conveyor belt, is protected by a motorised transparent door (29). Such a door is preferably driven by a pneumatic piston (30).

The extractor device (3) consists of a chassis where there are the elements that are now to be described next.

First of all, a pair of pincers (14), the "scissors" kind, driven by a pneumatic cylinder (15), which take the free end of the funnel. Such pincers, when taking the free end of the funnel (11), hold the casing there is around it, and that helps the whole tube of casing to spread in a controlled way, showing some opposition to being moved forward while it is filled with the meat.

Next, there is a clipping machine (16), the standard kind, which does three actions on the piece of meat that has just been stuffed; and the three actions are done at the same time: it places two clips, it places a piece of cord with one of the clips (so that the product can be hung when the process this has to undergo is finished) and lastly, it cuts the casing between the two clips. The clipping machine (16) is set on two mountings (17 and 18), which move cross (17) and along (18) in relation to the stuffing funnel (11).

To both sides of the clipping machine (16) there are two casing throttles (19), where the funnel gets through; the aim is to throttle the casing to both sides of the clipping machine (16), just before and during the time it is in working order, with the aim of helping the clipping, tying and cutting the clipping machine does on the product. Every throttle (19) consists of two yokes put face to face (19a and 19b), each one of them with a groove (20) in its central part, and also a pneumatic cylinder (21).

Finally, together with the elements described above, there is a conveyor belt (22) that takes out the product from the line when this is finished. The conveyor belt has a pneumatic jaw (23) that stops the piece of meat that has already been stuffed and clipped. This is driven by pneumatic cylinders (24) and a manual regulator device (24) at the same height, the "scissors" kind, which adjusts the height of the conveyor belt (22), depending on the diameter of the piece of meat to be stuffed.

All the devices described here are controlled automatically by a central unit, not depicted in the drawings, which allows being programmed in a flexible way.

Any materials used to build the different elements that make up such an invention will be independent from it, as well as the shapes, sizes and accessories this can have. These elements can be changed by others which are technically equivalent, as long as they do not have an effect on the essential thing, and they do not keep away from the limits established in the claims section.

Once established the above-mentioned conception, next there is the claims column, summarising this way the new developments wished to be claimed:

## Claims

1. Stuffing line for pieces of meat and similar kinds of product, having special characteristics because of the fact that it basically consists of a meat supplying device (1)with the use of a conveyor belt (4), which puts a piece of meat into the stuffing machine per every working cycle, a stuffing device (2) that compresses and puts the product into a tube of casing and, optionally, an extractor device (3) which closes the piece of meat that has been stuffed inside the casing and takes it to the next step in the production line.

2. Stuffing line as it has been claimed before, special because the meat supplying device (1) consists of a conveyor belt (4) which is driven by an electric engine of the "step by step" kind, and with some separators (5) at right angles to the direction of the belt movement; the separators are used to create several intervals all along the conveyor belt, where the pieces of product to be stuffed should be placed.

3. Stuffing line as it has been claimed before, peculiar because every one of the intervals in the conveyor belt (4) has got a detector (26), which is detected by sensor (27) placed in the chassis of the machine. It is because of the indications given by the sensor that the "step by step" engine gets the conveyor belt move the distance corresponding to the width of one of the intervals.

4. Stuffing line as it has been claimed before, having special characteristics in the fact that the stuffing device (2) consists of a chassis (6), where there is a pneumatic press (28). The press works with a mould that can be changed; this mould consists of a fix part (8) inside the chassis (6) and another part that moves (7), which is associated to the press.

5. Stuffing line as it has been claimed before, special because when the two parts of the mould (7 and 8), which can be changed, are joined together, they form a straight cavity with constant section, opened at the two sides of it. Then the head of a pushing piston can get through such a space, driven by a pneumatic cylinder (10). The piston mentioned above is the one that moves the compacted piece of meat all along the closed mould. This way the product is pushed out from the mould through a stuffing funnel (11), which can be changed the same way the mould is. A tube of folded casing , where the piece of meat will be fit, should have been put all around the external part of this funnel.

6. Stuffing line as it has been claimed before, peculiar because the stuffing funnel (11) is made of a tube with internal section, which is put to the same level of the cavity inside the mould (7 and 8). This funnel has an anchoring system (12), like in a bayonet, and it is fixed to the small auxiliary door (13) there is in the stuffing device for the lower part of the changeable mould (8) to be put in and out. This way, the funnel is at the same level of the mould.

7. Stuffing line as it has been claimed before, having special characteristics in the fact that the extractor device (3) consists of a chassis where there are a pair of pincers (14), the "scissors" kind, which take the free end of the stuffing funnel. Such pincers, when taking the free end of the funnel (11), hold the casing there is around it, and that helps the whole tube of casing to spread in a controlled way, showing some opposition to being moved forward while it is filled with the meat.

8. Stuffing line as it has been claimed before, special because in the extractor device (3) there is a clipping machine (16), the standard kind, which can place two clips, place a piece of cord with one of the two clips, and lastly cut the casing. Such a clipping machine is set on two mountings (17 and 18), the first one moving cross (17) and the second one moving along (18) in relation to the stuffing funnel (11).

9. Stuffing line as it has been claimed before, peculiar because to both sides of the dipping machine (16) there are two throttles (19), which throttle the casing just in front of the clipping machine until it reaches a diameter that allows clipping, tying and cutting such a casing.

10. Stuffing line as it has been claimed before, having special characteristics in the fact that each one of the throttles (19) consists of two yokes (19a and 19b) that make up a ring, each one of them with a groove (20) in its central part, and also a pneumatic cylinder (21).

11. Stuffing line as it has been claimed before, special because the tube of casing, when throttled, is located in the space there is between the grooves in the two semicircular yokes (19a and 19b) when the pneumatic cylinders (21) are extended.

12. Stuffing line as it has been claimed before, peculiar because the extractor device (3) has a conveyor belt (22) that takes out the product. The belt is set on a manual regulator device (25), the "scissors kind", which can be regulated in height. At the front of such a conveyor belt there is a pneumatic jaw (23), which can stop the piece of meat when this is tied and clipped.

13. Stuffing line as it has been claimed before, having special characteristics because the place where we get to the stuffing device (2), where the piece of meat is put into the mould (8) coming from conveyor belt, is protected by a motorised transparent door (29). Such a door is preferably driven by a pneumatic piston (30).
